# FASCICULE DE BREVET EUROPEEN

(11) **EP 0 809 457 B1**
(45) Date de publication et mention de la délivrance du brevet: **12.05.1999**
(21) Numéro de dépôt: 96903081.6
(22) Date de dépôt: 12.02.1996
(51) Int. Cl.: A47J 44/00, A47J 43/08

(54) **BATTEUR-MIXEUR ELECTRIQUE A MAIN**
ELEKTRISCH BETRIEBENER HANDSCHLÄGER UND -RÜHRER
HAND-HELD ELECTRIC MIXER

(30) Priorité: 16.02.1995 FR 9501795
(43) Date de publication de la demande: 03.12.1997
(73) Titulaire: MOULINEX S.A., 75008 Paris (FR)
(72) Inventeur: HARRY, Jean-Michel, F-72260 Marolles-les-Braults (FR); TROCHERIE, Jean-Pierre, F-53370 Saint-Pierre-des-Nids (FR); LINGER, Jean-Jacques, F-53000 Laval (FR)
(74) Mandataire: Busquets, Jean-Pierre
(86) Numéro de dépôt international: FR9600219
(87) Numéro de publication internationale: WO9625080

(56) Documents cités:
- DE-A- 2 802 155
- DE-B- 2 904 159
- GB-A- 954 180
- US-A- 3 595 093

## Description

La présente invention concerne un batteur-mixeur électrique à main, notamment un batteur-mixeur ménager, destiné à entraîner de manière sélective au moins un accessoire dit de battage tel que, par exemple, un fouet, ou un accessoire dit de mixage tel que, par exemple, un pied mixeur, comprenant un boîtier de forme générale prismatique renfermant un moteur d'entraînement électrique, deux dispositifs rotatifs d'accouplement qui sont associés à l'arbre du moteur, dont l'un débouche dans la base du boîtier par une ouverture au travers de laquelle l'accessoire de battage peut y être fixé, et dont l'autre communique avec l'extérieur du boîtier par une ouverture d'accouplement au travers de laquelle l'accessoire de mixage peut y être fixé, un commutateur de commande du moteur électrique qui est actionné par un bouton de manoeuvre manuelle ayant un corps monté dans la partie supérieure du boîtier, à l'avant de celui-ci dans la région surplombant l'accessoire de battage, et qui est susceptible d'occuper une position "arrêt", une ou plusieurs positions "marche continue", et une position "marche instantanée", un organe d'éjection associé au dispositif d'accouplement de l'accessoire de battage et déplaçable en hauteur d'une position basse en l'absence de l'accessoire de battage à une position haute sous l'action dudit accessoire de battage lors de son engagement dans le dispositif d'accouplement correspondant, ainsi que des moyens mécaniques interdisant d'amener le commutateur en position "marche continue" lorsque l'accessoire de mixage est inséré dans son dispositif d'accouplement et autorisant d'amener le commutateur en position "marche continue" ou en position "marche instantanée" lorsque l'accessoire de battage est inséré dans son dispositif d'accouplement.

On entend par accessoire de battage un outil de travail du type fouet ou malaxeur, et par accessoire de mixage un accessoire à outil de travail tournant à vitesse élevée du type pied mixeur à hélice rotative, ou encore du type bol mixeur à couteau rotatif.

On connaît un appareil de ce genre qui répond parfaitement aux exigences de sécurité d'utilisation consistant à interdire uniquement la marche continue du moteur en présence de l'accessoire de mixage, ceci dans le but d'interdire le fonctionnement de l'appareil avec son commutateur verrouillé en position "marche continue" lors de situations critiques telles que, par exemple, celle où l'appareil en service glisse des mains de l'utilisateur. Dans cet appareil, l'ouverture d'accouplement de l'accessoire de mixage est située à l'avant de l'appareil, du même côté que le bouton rotatif d'actionnement du commutateur de commande du moteur électrique, et les moyens mécaniques de sécurité interdisant d'amener le commutateur en position "marche continue" en présence de l'accessoire de mixage, sont constitués par un doigt vertical qui est monté sur un obturateur coulissant associé à l'ouverture d'accouplement de l'accessoire de mixage et qui, après ouverture de l'obturateur par coulissement en direction verticale, vient bloquer l'axe de rotation du bouton du côté de ses positions "marche continue".

On connaît également, par le document DE-A-2 904 159, un appareil électrique à main destiné à entraîner de manière sélective un accessoire de battage ou un accessoire de coupe, et conçu pour assurer une sécurité de fonctionnement en interdisant uniquement la marche continue du moteur en présence de l'accessoire de coupe. Selon ce document, l'ouverture d'accouplement de l'accessoire de coupe est située à l'avant de l'appareil, du même côté que le bouton d'actionnement du commutateur de commande du moteur, et l'organe d'éjection de l'organe de battage occupe une même position haute de rappel tant en présence qu'en l'absence de cet organe de battage ; dans cet appareil, les moyens mécaniques de sécurité interdisant d'amener le commutateur en position " marche continue " en présence de l'accessoire de coupe, comportent un organe mobile interposé entre le dispositif d'accouplement de l'accessoire de coupe et une pièce mobile en translation verticale, montée dans l'appareil d'une manière indé-pendante de l'organe d'éjection, et pourvue d'un doigt d'attaque, de sorte qu'en présence de l'accessoire de coupe, l'organe mobile actionne ladite pièce qui se déplace vers le haut, à l'encontre d'un ressort de rappel, et dont le doigt d'attaque vient bloquer le bouton du côté de ses positions " marche continue ". Un tel mécanisme de sécurité est toutefois d'une réalisation compliquée et d'un coût de fabrication élevé.

Par ailleurs, il existe actuellement de nombreux batteurs-mixeurs électriques à main qui, eux, comportent une ouverture d'accouplement de l'organe de mixage qui est située, non pas à l'avant de l'appareil, mais à l'arrière de celui-ci, à l'opposé du bouton d'actionnement du commutateur, de sorte que les moyens mécaniques de sécurité de l'art antérieur, décrits ci-dessus, sont inadaptables pour ces batteurs-mixeurs.

L'invention a pour but de remédier à cet inconvénient et de réaliser un batteur-mixeur électrique à main, du type à ouverture d'accouplement de l'accessoire de mixage située à l'arrière de l'appareil, à l'opposé du bouton d'actionnement du commutateur, dans lequel l'interdiction d'amener le commutateur en position "marche continue" en présence de l'accessoire de mixage et l'autorisation d'amener ledit commutateur en position "marche continue" ou en position "marche instantanée" en présence de l'accessoire de battage, soient obtenues par des moyens mécaniques simples et fiables, assurant une sécurité absolue de fonctionnement de l'appareil.

Selon l'invention, un batteur-mixeur du type décrit précédemment, est plus particulièrement caractérisé en ce que l'ouverture d'accouplement de l'accessoire de mixage étant ménagée dans la paroi arrière du boîtier, l'organe d'éjection comporte en sa partie supérieure un doigt d'attaque et les moyens mécaniques comportent un organe mobile qui est interposé entre l'organe d'éjection et le dispositif d'accouplement de l'accessoire de mixage, dont le déplacement est subordonné à la mise en place de l'accessoire de mixage dans son dispositif d'accouplement, à l'encontre de moyens de rappel élastique, et qui est adapté, d'une part, à rendre libre le déplacement de l'organe d'éjection qui passe de sa position basse à sa position haute lorsque l'accessoire de battage est inséré dans son dispositif d'accouplement, le doigt d'attaque de l'organe d'élection en position haute laissant libre la manoeuvre du bouton, et d'autre part, à bloquer l'organe d'éjection en position basse lorsque l'accessoire de mixage est inséré dans son dispositif d'accouplement, le doigt d'attaque de l'organe d'éjection bloqué en position basse bloquant le bouton du côté correspondant à la position "marche continue".

Ainsi, l'invention utilise judicieusement l'organe d'éjection mobile habituellement monté dans ce type d'appareil pour permettre, d'une manière simple, de bloquer le bouton d'actionnement du commutateur lui interdisant uniquement d'occuper ses positions "marche continue" en présence de l'accessoire de mixage, et de libérer ce bouton d'actionnement lui permettant d'occuper ses positions "marche continue" ou sa position "marche instantanée" en présence de l'accessoire de battage.

Les caractéristiques et avantages de l'invention ressortiront d'ailleurs de la description qui va suivre, à titre d'exemple non limitatif, en référence aux dessins annexés dans lesquels :
- la figure 1 est une vue partielle en coupe verticale d'un batteur-mixeur selon l'invention, en l'absence d'accessoire ;
- les figures 2, 3 et 4 sont des vues en coupe transversale d'un bouton de manoeuvre manuelle associé à un doigt d'attaque pour le batteur-mixeur de la figure 1, lorsque le bouton est en position "arrêt" (figure 2), en position "marche continue" (figure 3) et en position "marche instantanée" (figure 4) ;
- la figure 5 est une vue identique à la figure 1, mais en présence d'un accessoire de battage ;
- les figures 6, 7 et 8 sont des vues en coupe transversale du bouton de manoeuvre associé au doigt d'attaque pour le batteur-mixeur de la figure 5, lorsque le bouton est en position "arrêt" (figure 6), en position "marche continue" (figure 7) et en position "marche instantanée" (figure 8) ;
- la figure 9 est une vue identique à la figure 1, mais en présence d'un accessoire de mixage ; et
- les figures 10 et 11 sont des vues en coupe transversale du bouton de manoeuvre associé au doigt d'attaque pour le batteur-mixeur de la figure 9, lorsque le bouton est en position "arrêt" (figure 10) et en position "marche instantanée" (figure 11).

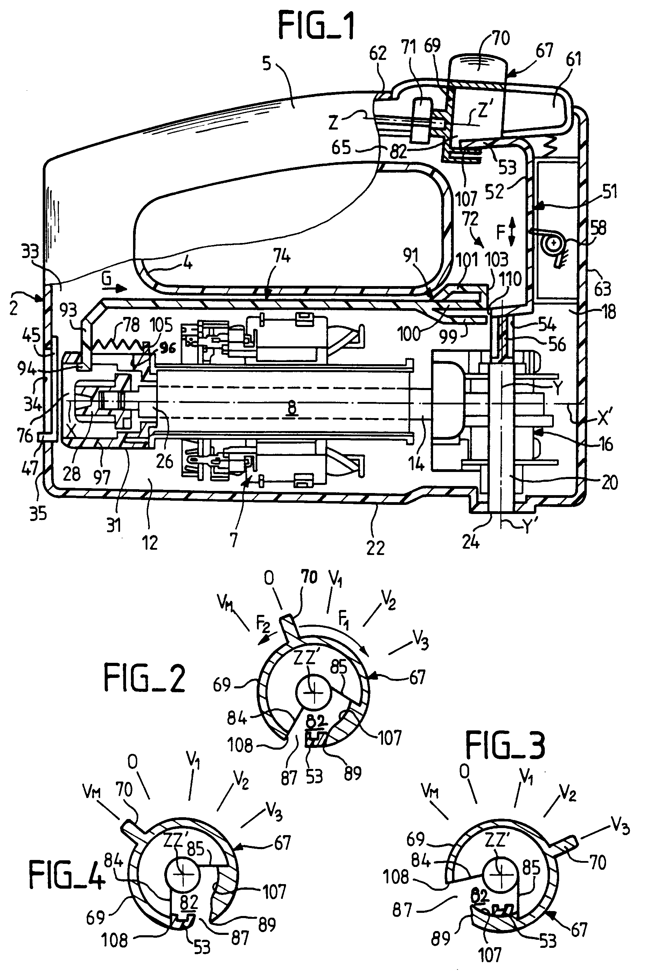

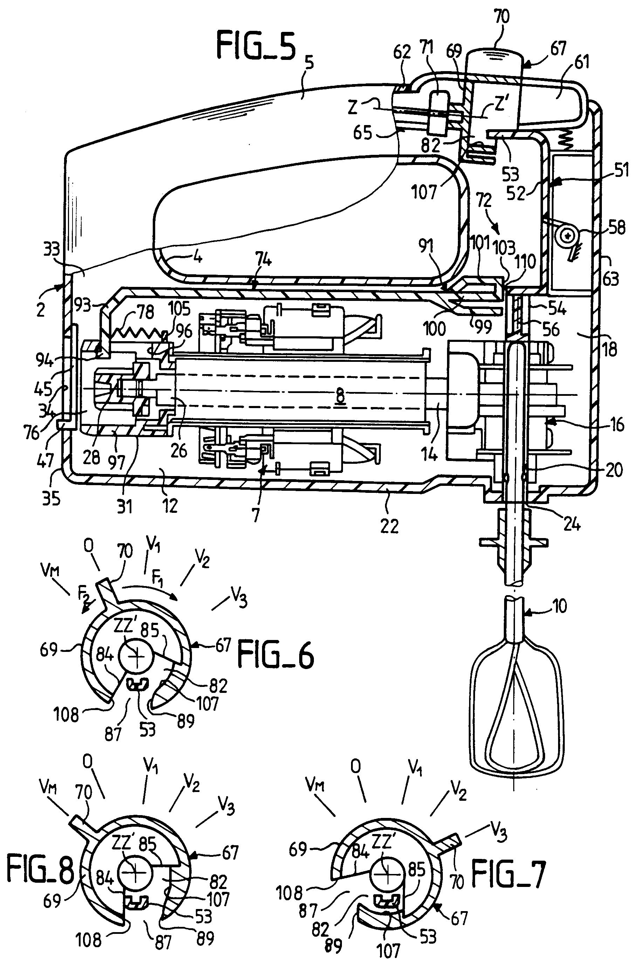

Le batteur-mixeur à main illustré à la figure 1 comprend un boîtier 2 de forme générale prismatique présentant une partie évidée 4 qui délimite une poignée 5, et contenant un moteur d'entraînement électrique 7 muni d'un arbre 8 d'axe XX' et logé, en utilisation normale avec au moins un accessoire dit de battage tel que, par exemple, un fouet 10 comme montré à la figure 5, dans la partie inférieure 12 du boîtier 2 en s'étendant horizontalement.

L'arbre 8 du moteur d'entraînement 7 porte à son extrémité antérieure 14 une vis sans fin non représentée qui coopère avec deux pignons hélicoïdaux tournant chacun autour d'un axe vertical YY' perpendiculaire à l'axe XX', et qui forme avec ceux-ci un réducteur 16. Ces deux pignons hélicoïdaux sont situés dans la partie avant 18 du boîtier et sont liés respectivement à deux dispositifs d'accouplement 20 d'axe YY', dont un seul est visible à la figure 1, qui débouchent dans la base 22 du boîtier 2 par deux ouvertures 24 au travers desquelles peuvent être fixés côte à côte, ou l'un derrière l'autre, deux fouets 10 dont un seul est montré à la figure 5.

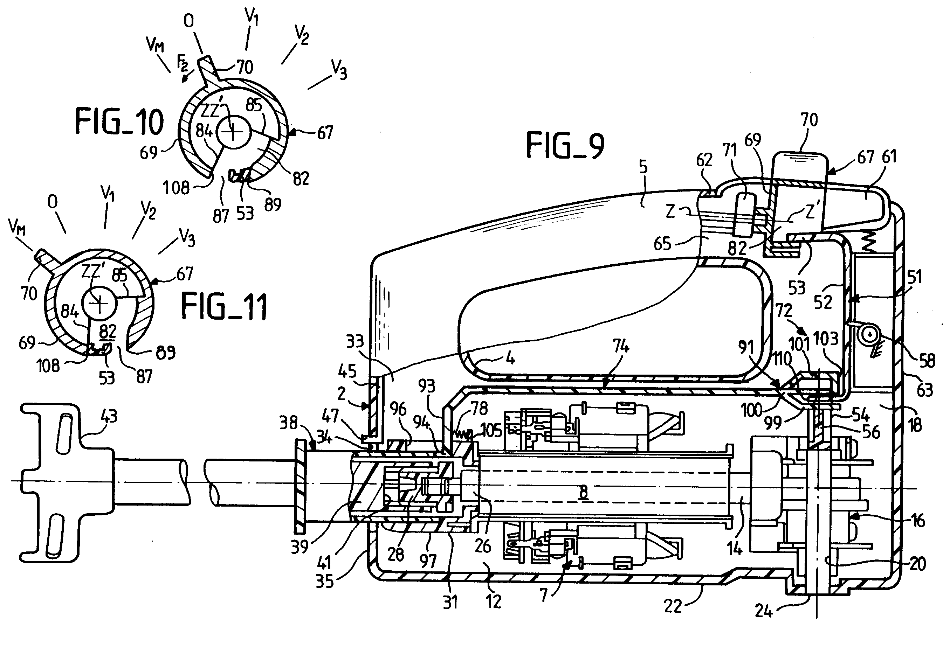

En regard de la figure 1, l'extrémité postérieure 26 de l'arbre 8 du moteur d'entraînement 7 porte un entraîneur rotatif 28 logé dans un fut cylindrique 31 qui s'étend horizontalement dans la partie arrière 33 du boîtier 2 et qui est ouvert en regard d'une ouverture d'accouplement 34 pratiquée dans la paroi arrière 35 du boîtier 2 et destinée à l'engagement d'un accessoire de mixage tel que, par exemple, un pied mixeur 38 comme montré à la figure 9, lequel pied mixeur 38 (figure 9) étant destiné à venir se fixer, par exemple par vissage, dans le fût 31 et renfermant un arbre 39 dont l'extrémité dite antérieure 41, opposée à la cloche 43 logeant une hélice non figurée, est adaptée à venir s'accoupler avec l'entraîneur 28.

D'une manière connue en soi, comme le montre la figure 1, l'ouverture d'accouplement 34 est fermée par un obturateur coulissant 45 qui est guidé sur la face interne de la paroi arrière 35 du boîtier 2 avec possibilité de coulissement dans la direction verticale et qui est fermé à l'aide d'une manette 47 faisant saillie vers l'arrière à travers l'ouverture 34.

Le batteur-mixeur comporte en outre un organe d'éjection mobile 51 agencé verticalement dans la partie avant 18 du boîtier 2 et comprenant une partie supérieure 52 de profil en forme de U vertical dont la partie terminale de la branche supérieure forme un doigt d'attaque 53, et une partie inférieure 54 constituée par deux pions verticaux cylindriques 56, dont un seul est visible à la figure 1, coopérant chacun avec le dispositif d'accouplement correspondant 20. Cet organe d'éjection 51 est sollicité par un ressort 58 et passe d'une position basse, définie en l'absence des fouets (figure 1), à une position haute dans laquelle les pions 56 sont actionnés par les fouets lors de leur fixation dans le dispositif d'accouplement associé 20 (figure 5), et inversement de cette position haute correspondant au montage des fouets à la position basse dans laquelle l'organe d'éjection libère les fouets sous l'action d'un bouton de commande manuelle 61 monté élastiquement en avant de la poignée 5 dans la paroi supérieure 62 du boîtier 2, à proximité immédiate de la paroi avant 63 dudit boîtier.

Dans la partie supérieure 65 du boîtier 2, derrière le bouton 61, est monté un bouton de manoeuvre manuelle 67 ayant un corps cylindrique 69, en l'occurrence du type rotatif avec un axe de rotation ZZ' sensiblement parallèle à l'axe XX' et transversal au déplacement vertical de l'organe d'éjection 51 selon la flèche F (figure 1), et présentant une manette de préhension 70 qui dépasse hors de la paroi supérieure 62 du boîtier 2. D'une manière connue en soi, ce bouton 67 est destiné à actionner un commutateur électrique 71 qui met le moteur 7 en et hors service et règle sa vitesse de rotation. A cet effet, le commutateur 71 peut être amené, sous l'action du bouton 67, à occuper une position "arrêt" (notée "0" sur les figures 2 à 4, 6 à 8, 10 et 11), une ou plusieurs positions successives "marche continue" distribuées dans le sens horaire, en l'occurrence au nombre de trois à titre d'exemple nullement limitatif (notées V1, V2 et V3 sur les figures 2 à 4, 6 à 8, 10 et 11), sélectionnant ainsi trois paliers de vitesse du moteur 7, et une position "marche instantanée" (notée VM sur les figures 2 à 4, 6 à 8, 10 et 11) agencée dans le sens antihoraire par rapport à la position "arrêt" et correspondant à un fonctionnement de courte durée du moteur 7 obtenu généralement en exerçant en permanence une pression sur le bouton 67. Ces différentes positions de commutation électrique du commutateur 71, ici "0", V1, V2, V3 et VM, sont indiquées sous la forme de repères marqués sur la paroi supérieure 62 du boîtier 2, devant le bouton 67 d'actionnement du commutateur électrique.

Le batteur-mixeur comporte de plus des moyens mécaniques dits de sécurité, désignés par le repère global 72 sur les figures 1, 5 et 9, qui sont destinés, d'une part, à interdire d'amener le commutateur en position "marche continue", c'est-à-dire à l'autoriser à occuper uniquement sa position "marche instantanée" VM, lorsque le pied mixeur 38 est fixé dans le fût 31 (figure 9), et d'autre part, à autoriser d'amener le commutateur en position "marche continue" V1, V2 ou V3, ou en position "marche instantanée" VM lorsque les fouets 10 sont fixés chacun dans le dispositif d'accouplement correspondant 20 (figure 5).

Conformément à l'invention, ces moyens mécaniques 72 comportent un organe mobile 74, en l'occurrence une tringle ou tige métallique que l'on détaillera par la suite, qui est interposé entre l'organe d'éjection mobile 51 et le passage interne 76 du fût 31, dont le déplacement est subordonné à la fixation du pied mixeur 38 dans le fût 31 (figure 9), à l'encontre d'un ressort de rappel 78, et qui est susceptible d'occuper deux positions, à savoir :
- une position dite de battage (figure 5) dans laquelle il rend libre le déplacement de l'organe d'éjection 51 qui passe de sa position basse à sa position haute lorsque les fouets 10 sont fixés chacun dans le dispositif d'accouplement correspondant 20, le doigt d'attaque 53 de l'organe d'éjection 51 en position haute venant, lorsque le bouton rotatif 67 est en position "0" comme montré à la figure 6, en engagement libre à l'intérieur d'un évidement 82 (figure 6) pratiqué dans le corps 69 du bouton 67, bordé par deux parois internes 84 et 85, et débouchant dans une découpe 87 pratiquée dans la surface externe inférieure du corps 69 du bouton 67 ; le bouton 67, figure 6, n'étant pas bloqué, il peut donc tourner vers ses positions "marche continue" V1, V2 et V3, ainsi que vers sa position "marche instantanée" VM ;
- une position dite de mixage (figure 9) dans laquelle il bloque l'organe d'éjection 51 en position basse lorsque le pied mixeur 38 est fixé dans le fût 31, le doigt d'attaque 53 de l'organe d'éjection 51 bloqué en position basse étant, lorsque le bouton rotatif 67 est en position "0" comme montré à la figure 10, en butée contre le bord 89 de la découpe 87 du corps 69 du bouton 67 qui est situé du côté correspondant à ses positions "marche continue" ; le bouton 67, figure 10, étant bloqué en rotation pour ses positions "marche continue" par le doigt d'attaque 53 de l'organe d'éjection 51 bloqué en position basse, il peut donc tourner uniquement vers sa position "marche instantanée" VM.

Comme le montrent les figures 2 à 4, 6 à 8, 10 et 11, les parois internes 84 et 85 de l'évidement 82 du corps 69 du bouton rotatif 67 définissent ensemble un secteur angulaire qui forme un débattement angulaire déterminé correspondant au mouvement de rotation du bouton 67 depuis sa position extrême "marche continue" V3 jusqu'à sa position "marche instantanée" VM.

Dans l'exemple de réalisation illustré aux figures 1, 5 et 9, la tringle 74 est montée coulissante, sous la partie évidée 4 du boîtier 2, dans une direction horizontale, et présente une partie antérieure réalisée sous la forme d'un organe de blocage débrayable 91 de l'organe d'éjection 51, et une partie postérieure réalisée sous la forme d'une patte d'accrochage 93 engagée, par son extrémité libre formant un ergot 94, à l'intérieur du fût 31 à travers une lumière de débattement 96 ménagée dans la paroi latérale 97 du fût 31.

Dans cet exemple, l'organe de blocage débrayable 91 est conformé en une fourche verticale à trois dents 99, 100 et 101 dont Tes extrémités libres de deux d'entre elles, à savoir la dent centrale 100 et la dent supérieure 101, sont reliées entre elles par une surface de butée 103.

Comme le montrent les figures 1, 5 et 9, le ressort de rappel 78 de la tringle 74 est un ressort de compression interposé entre la partie inférieure de la patte d'accrochage 93 de la tringle 74 et une aile verticale 105 ménagée sur la face externe de la paroi latérale 97 du fut 31, à proximité du fond de celui-ci.

Dans la position d'arrêt du batteur-mixeur, en l'absence de tout accessoire, comme illustré à la figure 1, la tringle 74 occupe une position de repos dans laquelle sa partie antérieure aux trois dents 99, 100 et 101 est à l'état débrayé par rapport à l'organe d'éjection 51 en position basse, lequel organe d'éjection est donc rendu libre, tandis que sa patte d'accrochage 93 coopère en appui par son ergot 94 avec la face interne de la paroi latérale 97 du fût 31, sous l'action du ressort de compression 78.

Dans cette position d'arrêt, le bouton rotatif 67 est en position "0" pour laquelle le doigt d'attaque 53 de l'organe d'éjection 51 en position basse par le ressort 58 est en butée contre le bord 89 de la découpe 87 du corps du bouton 67, comme on le voit à la figure 2. Grâce à une rampe 107 s'étendant dans l'évidement 82 du corps du bouton 67, à partir de ce bord 89, l'utilisateur peut tourner le bouton 67 en sens horaire suivant la flèche F1 de la figure 2, vers l'une quelconque de ses positions "marche continue" V1, V2 ou V3 pour laquelle le doigt d'attaque 53 de l'organe d'éjection 51 glisse le long de la rampe 107, autorisant ainsi la marche continue du moteur, voir figure 3. L'utilisateur peut également tourner le bouton 67 en sens antihoraire suivant la flèche F2 de la figure 2, vers sa position "marche instantanée" VM, le doigt d'attaque 53 de l'organe d'éjection 51 étant, en fin de course du bouton 67, en appui contre l'autre bord 108 de la découpe 87 du corps du bouton à partir duquel s'étend la paroi interne 84 de l'évidement 82, autorisant ainsi la marche instantanée du moteur, voir figure 4.

Ainsi, le fait de pouvoir activer le moteur en l'absence d'accessoire, tant en marche continue qu'en marche instantanée, est particulièrement avantageux car cela permet à l'utilisateur de s'assurer en permanence du bon fonctionnement de l'appareil avant utilisation.

En référence à la figure 5, la tringle 74 occupe sa position de battage qui correspond à sa position de repos de la figure 1 dans laquelle l'organe d'éjection 51 est à l'état libre et autorise donc la fixation des fouets 10. Lors de l'engagement de chacun des fouets 10 dans le dispositif d'accouplement correspondant 20, figure 5, l'extrémité libre du fouet 10 sollicite le pion correspondant 56 de l'organe d'éjection 51 qui passe en sa position haute dans laquelle une surface de butée 110 prévue sur la branche inférieure de la partie supérieure 52 en forme de U de l'organe d'éjection 51 vient en regard et à très faible distance de la surface de butée 103 de la tringle 74 de manière à interdire, dans cette position de battage, le montage du pied mixeur dans le fût 31.

Dans cette position de battage, le bouton rotatif 67 étant en position "0" comme illustré à la figure 6, le doigt d'attaque 53 de l'organe d'éjection 51 en position haute est en engagement libre à l'intérieur de l'évidement 82 du corps du bouton 67 qui est donc libre en rotation. L'utilisateur peut alors tourner le bouton 67 pour amener le commutateur 71 soit, par suite d'une rotation horaire du bouton (flèche F1 à la figure 6), dans l'une quelconque des positions de "marche continue" V1, V2 ou V3 comme montré à la figure 7, autorisant ainsi la marche continue du moteur, soit, par suite d'une rotation antihoraire du bouton (flèche F2 à la figure 6), dans la position de "marche instantanée" VM dans laquelle la paroi interne 84 de l'évidement 82 du corps du bouton 67 est en butée contre le doigt d'attaque 53 de l'organe d'éjection 51 comme montré à la figure 8, autorisant ainsi la marche instantanée du moteur.

A partir de la position de battage de la figure 5, les fouets 10 peuvent être libérés par l'organe d'éjection 51 sous l'action du bouton de commande manuelle 61, ledit organe d'éjection 51 revenant à sa position basse telle que montrée à la figure 1.

En référence à la figure 9, la tringle 74 occupe sa position de mixage en laquelle elle est amenée par coulissement suivant le sens de la flèche G de la figure 1, sous l'action de la mise en place par vissage du pied mixeur 38, après ouverture de l'obturateur 45, provoquant alors le déplacement longitudinal de l'ergot 94 de la patte d'accrochage 93 à l'intérieur du fût 31, à l'encontre du ressort de compression 78 ; en fin de course de vissage du pied mixeur 38, l'arbre 39 de celui-ci est accouplé avec l'entraîneur 28. Dans cette position de mixage, figure 9, la partie supérieure de chaque pion 56 de l'organe d'éjection 51 en position basse est en prise, par l'intermédiaire de son passage d'engagement, avec la dent inférieure 99 de la partie antérieure de la tringle 74 ; l'organe d'éjection 51 étant bloqué en position basse, les fouets ne peuvent donc pas être fixés dans leurs dispositifs d'accouplement respectifs 20.

Dans cette position de mixage, le bouton rotatif 67 étant en position "0" comme illustré à la figure 10, le doigt d'attaque 53 de l'organe d'éjection 51 bloqué en position basse est en butée contre le bord 89 de la découpe 87 du corps du bouton 67, empêchant alors la rotation du bouton 67 vers ses positions "marche continue" V1, V2 ou V3, et donc interdisant la marche continue du moteur, mais autorisant la rotation en sens antihoraire (flèche F2 à la figure 10) dudit bouton 67 vers sa position "marche instantanée" VM dans laquelle le doigt d'attaque 53, en fin de course du bouton 67, est en appui contre le bord 108 de la découpe 87 du corps du bouton 67, autorisant ainsi la marche instantanée du moteur, voir figure 11.

A partir de la position de mixage de la figure 9, le pied mixeur 38 peut être simplement retiré par dévissage, la tringle 74 revenant alors, sous l'action du ressort de compression 78, dans sa position de repos telle que montrée à la figure 1.

## Revendications

1. Batteur-mixeur électrique à main destiné à entraîner de manière sélective au moins un accessoire dit de battage (10) tel que, par exemple, un fouet, ou un accessoire dit de mixage (38) tel que, par exemple, un pied mixeur, comprenant un boîtier (2) de forme générale prismatique renfermant un moteur d'entraînement électrique (7), deux dispositifs rotatifs d'accouplement (20,28) qui sont associés à l'arbre du moteur (7), dont l'un (20) débouche dans la base du boîtier par une ouverture (24) au travers de laquelle l'accessoire de battage (10) peut y être fixé, et dont l'autre (28) communique avec l'extérieur du boîtier par une ouverture d'accouplement (34) au travers de laquelle l'accessoire de mixage (38) peut y être fixé, un commutateur (71) de commande du moteur électrique qui est actionné par un bouton de manoeuvre manuelle (67) ayant un corps (69) monté dans la partie supérieure (65) du boîtier (2), à l'avant de celui-ci dans la région surplombant l'accessoire de battage, et qui est susceptible d'occuper une position "arrêt", une ou plusieurs positions "marche continue", et une position "marche instantanée", un organe d'éjection (51) associé au dispositif (20) d'accouplement de l'accessoire de battage et déplaçable en hauteur d'une position basse en l'absence de l'accessoire de battage à une position haute sous l'action dudit accessoire de battage lors de son en gagement dans le dispositif d'accouplement correspondant (20), ainsi que des moyens mécaniques (72) interdisant d'amener le commutateur (71) en position "marche continue" lorsque l'accessoire de mixage (38) est inséré dans son dispositif d'accouplement (34) et autorisant d'amener le commutateur (71) en position "marche continue" ou en position "marche instantanée" lorsque l'accessoire de battage (10) est inséré dans son dispositif d'accouplement (20),
**caractérisé en ce que** l'ouverture (34) d'accouplement de l'accessoire de mixage (38) étant ménagée dans la paroi arrière (35) du boîtier (2), l'organe d'éjection (51) comporte en sa partie supérieure un doigt d'attaque (53) et les moyens mécaniques (72) comportent un organe mobile (74) qui est interposé entre l'organe d'éjection (51) et le dispositif (28) d'accouplement de l'accessoire de mixage (38), dont le déplacement est subordonné à la mise en place de l'accessoire de mixage (38) dans son dispositif d'accouplement, à l'encontre de moyens de rappel élastique (78), et qui est adapté, d'une part, à rendre libre le déplacement de l'organe d'éjection (51) qui passe de sa position basse à sa position haute lorsque l'accessoire de battage (10) est inséré dans son dispositif d'accouplement (20), le doigt d'attaque (53) de l'organe d'éjection (51) en position haute laissant libre la manoeuvre du bouton (67), et d'autre part, à bloquer l'organe d'éjection (51) en position basse lorsque l'accessoire de mixage (38) est inséré dans son dispositif d'accouplement (28), le doigt d'attaque (53) de l'organe d'éjection (51) bloqué en position basse bloquant le bouton (67) du côté correspondant à la position "marche continue".

2. Batteur-mixeur selon la revendication 1,
**caractérisé en ce que** le corps (69) du bouton de manoeuvre manuelle (67) présente un évidement (82) qui est bordé par deux parois internes (84,85) et dans lequel peut être engagé, à travers une découpe (87) pratiquée dans la surface externe dudit corps, le doigt d'attaque (53) de l'organe d'éjection (51), ledit doigt (53) venant en engagement libre à l'intérieur dudit évidement (82) lorsque l'accessoire de battage (10) est inséré dans son dispositif d'accouplement (20), et étant en butée contre le bord (89) de la découpe (87) du corps du bouton qui est situé du côté correspondant à la position "marche continue" lorsque l'accessoire de mixage (38) est inséré dans son dispositif d'accouplement (28).

3. Batteur-mixeur selon la revendication 2,
**caractérisé en ce que** le bouton de manoeuvre manuelle (67) est monté rotatif autour d'un axe sensiblement parallèle à l'axe longitudinal de l'arbre du moteur (7) et transversal au déplacement vertical de l'organe d'éjection (51), et les parois internes (84,85) bordant l'évidement (82) du corps du bouton (67) définissent ensemble un secteur circulaire formant un débattement angulaire correspondant au mouvement de rotation du bouton (67) visant à amener le commutateur (71) depuis sa position extrême "marche continue" jusqu'à sa position "marche instantanée".

4. Batteur-mixeur selon l'une des revendications 1 à 3,
**caractérisé en ce que** le dispositif d'accouplement de l'accessoire de mixage étant constitué par un entraîneur rotatif (28) porté par l'extrémité postérieure (26) de l'arbre (8) du moteur (7) et logé dans un fût cylindrique (31) ouvert en regard de l'ouverture d'accouplement (34), ledit accessoire de mixage (38) comportant un arbre (39) dont une extrémité vient s'accoupler avec ledit entraîneur (28) lors de son engagement dans le fût (31), et le boîtier (2) présentant une partie évidée (4) qui délimite une poignée (5), l'organe mobile (74) est une tringle coulissante agencée horizontalement sous ladite partie évidée (4) du boîtier, dont la partie antérieure est réalisée sous la forme d'un organe de blocage débrayable (91) qui, en l'absence de l'accessoire de mixage (38), est à l'état débrayé par rapport à l'organe d'éjection (51) de manière à rendre libre ce dernier, et qui, lorsque l'extrémité de l'arbre (39) de l'accessoire de mixage (38) est accouplée avec ledit entraîneur (28), est en prise, à l'encontre desdits moyens de rappel élastique (78), avec l'organe d'éjection (51) en position basse de manière à bloquer ce dernier, et dont la partie postérieure est réalisée sous la forme d'une patte d'accrochage (93) engagée par son extrémité libre à l'intérieur du fût (31) à travers une lumière de débattement (96) ménagée dans la paroi latérale du fût (31), ladite patte (93) coopérant en appui avec la face interne de la paroi latérale du fût (31) en l'absence de l'accessoire de mixage, et étant déplacée, à l'encontre desdits moyens de rappel élastique (78), par l'accessoire de mixage (38) lorsque l'extrémité de son arbre (39) vient s'accoupler avec ledit entraîneur (28).

5. Batteur-mixeur selon la revendication 4,
**caractérisé en ce que** l'organe d'éjection (51) comportant en sa partie inférieure un pion (56), la partie supérieure dudit organe d'éjection (51) présente à sa base une surface de butée (110), et l'organe de blocage débrayable (91) de la tringle (74) est conformé en une fourche verticale à trois dents (99,100,101) dont les extrémités libres de deux d'entre elles, à savoir la dent centrale (100) et la dent supérieure (101), sont reliées par une autre surface de butée (103) destinée à venir en regard de ladite surface de butée (110) de la partie supérieure de l'organe d'éjection (51) lorsque l'accessoire de battage (10) est inséré dans son dispositif d'accouplement (20), ledit pion (56) présentant un passage d'engagement de la dent inférieure (99) de la fourche lorsque l'extrémité de l'arbre (39) de l'accessoire de mixage (38) est accouplée avec l'entraîneur (28).

6. Batteur-mixeur selon la revendication 4 ou 5,
**caractérisé en ce que** les moyens de rappel élastique (78) sont constitués par un ressort de compression interposé entre la partie inférieure de la patte d'accrochage (93) de la tringle (74) et une aile verticale (105) ménagée sur la face externe de la paroi latérale du fût (31), à proximité du fond de celui-ci.

## Claims

1. A hand held electric mixer, adapted to drive selectively at least one so-called beating attachment (10) such as, for example, a whisk, or a so-called mixing attachment (38) such as, for example, a mixer foot, comprising a casing (2) of generally prismatic shape enclosing an electric drive motor (7), two rotary coupling devices (20, 28) which are associated with the shaft of the motor (7), one of which (20) is open in the base of the casing through an aperture (24) through which the beating attachment (10) can be attached to it, and the other of which (28) is in communication with the outside of the casing through a coupling aperture (34) through which the mixing attachment (38) can be attached to it, a switch (71) for controlling the electric motor which is actuated by a manual operating button (67) having a body (69) mounted in the upper part (65) of the casing (2), at the front of the latter in the region vertically above the beating attachment, and able to occupy a "stop" position, one or more "continuous operation" positions and a "momentary operation" position, an ejector element (51) associated with the device (20) for coupling the beating attachment and displaceable upwardly from a lower position, in the absence of the beating attachment, to an upper position by the engagement of the beating attachment in the corresponding coupling device (20), and mechanical means (72) preventing the switch (71) being put into the "continuous operation" position when the mixing attachment (38) is inserted in its coupling device (34), and enabling the switch (71) to be put into a "continuous operation" position or into a "momentary operation" position when the beating attachment (10) is inserted in its coupling device (20),
characterised in that the aperture (34) for coupling the mixing attachment (38) is formed in the rear wall (35) of the casing (2), the ejector element (51) comprises in its upper portion an actuating finger (53) and the mechanical means (72) comprise a movable element (74) which is interposed between the ejector element (51) and the device (28) for coupling the mixing attachment (38), the displacement of which, against the action of resilient return means (78), is dependent on the fitting of the mixing attachment (38) in place in its coupling device, and which is adapted, on the one hand, to free the ejector element (51) for movement in which it passes from its lower position to its upper position when the beating attachment (10) is inserted in its coupling device (20), the actuating finger (53) of the ejector element (51) in its upper position leaving the button (67) free for operation and, on the other hand, to block the ejector element (51) in its lower position when the mixing attachment (38) is inserted in its coupling device (28), the actuating finger (53) of the ejector element (51), when blocked in its lower position, preventing movement of the button (67) on the side corresponding to the "continuous operation" position.

2. A mixer according to claim 1,
characterised in that the body (69) of the manual operating button (67) has an opening (82) which is bounded by two internal walls (84, 85) and in which the actuating finger (53) of the ejector element (51) can be engaged through a mouth (87) made in the outer surface of the body, the finger (53) coming into free engagement inside the opening (82) when the beating attachment (10) is inserted in its coupling device (20) and being in abutment against the edge (89) of the mouth (87) in the body of the button which is situated on the side corresponding to the "continuous operation" position when the mixing attachment (38) is inserted in its coupling device (28).

3. A mixer according to claim 2,
characterised in that the manual operating button (67) is mounted for rotation about an axis substantially parallel to the longitudinal axis of the shaft of the motor (7) and transverse to the vertical movement of the ejector element (51), and the internal walls (84, 85) bounding the opening (82) in the body of the button (67) together define a circular sector which provides an angular clearance corresponding to the rotational movement of the button (67) allowing the switch (71) to be moved from its extreme "continuous operation" position to its "momentary operation" position.

4. A mixer according to any one of claims 1 to 3,
characterised in that the device for coupling the mixing attachment is constituted by a rotary drive element (28) carried by the rear end (26) of the shaft (8) of the motor (7) and is mounted in a cylindrical housing (31) which is open towards the coupling aperture (34), the mixing attachment (38) comprises a shaft (39), one end of which becomes coupled with the drive element (28) when it is engaged in the housing (31), and the casing (2) has an open part (4) which defines a handle (5), the movable element (74) is a sliding bar, which is disposed horizontally below the open part (4) of the casing, the front part of which is made in the form of a releasable blocking element (91) which, in the absence of the mixing attachment (38), is in the disengaged state with respect to the ejector element (51), whereby the latter is made free, and which, when the end of the shaft (39) of the mixing attachment (38) is coupled to the drive element (28), is engaged, against the action of said resilient return means (78), with the ejector element (51) in its lower position so as to block movement of the latter, and the rear part of which is made in the form of a hooking lug (93) which is engaged within the housing (31) by means of its free end extending through a displacement slot (96) formed in the side wall of the housing (31), the lug (93) bearing against the internal face of the side wall of the housing (31), in the absence of the mixing attachment, and being displaced, against the action of the resilient return means (78), by the mixing attachment (38) when the end of its shaft (39) is being coupled to the drive element (28).

5. A mixer according to claim 4,
characterised in that the ejector element (51) comprises a rod element (56) in its lower portion, the upper portion of the ejector element (51) has at its base an abutment surface (110) and the releasable blocking element (91) of the bar (74) is made as a vertical fork having three teeth (99, 100, 101), the free ends of two of which, namely the middle tooth (100) and the upper tooth (101) are joined together by another abutment surface (103) which is designed to face the abutment surface (110) of the upper portion of the ejector element (51) when the beating attachment (10) is inserted into its coupling device (20), the rod element (56) having a passage for engagement with the lower tooth (99) of the fork when the end of the shaft (39) of the mixing attachment (38) is coupled to the drive element (28).

6. A mixer according to claim 4 or 5,
characterised in that the resilient return means (78) consist of a compression spring interposed between the lower portion of the hooking lug (93) of the bar (74) and a vertical fin (105) formed on the outer face of the side wall of the housing (31), close to the base of the latter.

## Patentansprüche

1. Elektrischer Hand-Schläger-Mixer zum selektiven Antreiben mindestens eines Schlagzusatzes (10), wie beispielsweise eines Quirls, oder eines Mixzusatzes (38), wie beispielsweise eines Stabmixers, mit einem Gehäuse (2) von im ganzen prismatischer Form, das einen elektrischen Antriebsmotor (7) umschließt, zwei drehbaren Kupplungsvorrichtungen (20, 28), die mit der Welle des Motors (7) verbunden sind, von denen die eine (20) durch eine Öffnung (24) in die Gehäusebasis mündet, durch welche der Schlagzusatz (10) dort befestigt werden kann, und von denen die andere (28) durch eine Kupplungsöffnung (34) mit der Außenseite des Gehäuses in Verbindung steht, durch welche der Mixzusatz (38) dort befestigt werden kann, einem Schalter (71) zur Steuerung des Elektromotors, der von einem handbetätigbaren Knopf (67) beaufschlagt wird, der einen im oberen Bereich (65) des Gehäuses (2) vor diesem und im Bereich direkt über dem Schlagzusatz montierten Körper (69) aufweist und der eine 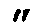 Stop"-Stellung, eine oder mehrere 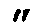 Dauerbetrieb"-Stellungen und eine 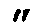 Momentanbetrieb"-Stellung einnehmen kann, einem mit der Kupplungsvorrichtung (20) des Schlagzusatzes zusammenwirkenden Ausstoßelement (51), das durch die Wirkung des Schlagzusatzs beim Einführen in die entsprechende Kupplungsvorrichtung (20) in der Höhe von einer tiefen Stellung bei Abwesenheit der Schlagzusätze in eine hohe Stellung verschiebbar ist, sowie mit einer mechanischen Vorrichtung (72), die verhindert, daß der Schalter (71) in die 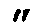 Dauerbetrieb"-Stellung gebracht werden kann, wenn der Mixer (38) in seine Kupplungsvorrichtung (34) eingesetzt ist und die es ermöglicht, daß der Schalter (71) in die 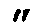 Dauerbetrieb"-Stellung oder in die 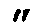 Momentanbetrieb"-Stellung gebracht werden kann, wenn der Schlagzusatz (10) in seine Kupplungsvorrichtung (20) eingesetzt ist, **dadurch gekennzeichnet, daß** die Kupplungsöffnung (34) des Mixzusatzes in der Rückwand (35) des Gehäuses (2) ausgebildet ist und das Ausstoß-Element (51) in seinem oberen Bereich einen Angriffsfinger (53) aufweist und die mechanische Vorrichtung (72) ein bewegliches Element (74) aufweist, das zwischen das Ausstoß-Element (51) und die Kupplungsvorrichtung (28) des Mixzusatzes (38) eingeschoben ist, dessen Verschiebung gegen eine elastische Rückholvorrichtung (78) vom Einsetzen des Mixzusatzes (38) in seine Kupplungsvorrichtung abhängt und das so ausgebildet ist, daß einerseits sich das Ausstoß-Element (51) frei bewegen kann, wenn der Schlagzusatz (10) in seine Kupplungsvorrichtung (20) eingesetzt ist, und von seiner tiefen in seine hohe Stellung gelangt, wobei der Angriffsfinger (53) des Ausstoß-Elements (51) in seiner hohen Stellung die freie Bewegung des Knopfes (67) ermöglicht, und daß andererseits das Ausstoß-Element (51) in seiner tiefen Stellung blockiert wird, wenn der Mixzusatz (38) in seine Kupplungsvorrichtung (28) eingesetzt ist, wobei der Angriffsfinger (53) des in der tiefen Stellung blockierten Ausstoß-Elementes (51) den Knopf (67) auf der Seite blockiert, die der 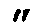 Dauerbetrieb"-Stellung entspricht.

2. Schläger-Mixer nach Anspruch 1, **dadurch gekennzeichnet, daß** der Körper (69) des handbetätigbaren Knopfes (67) eine Aussparung (82) aufweist, die von zwei Innenwänden (84, 85) gesäumt ist und in welche durch einen in der äußeren Fläche des Körpers ausgebildeten Ausschnitt (87) der Angriffsfinger (53) des Ausstoßelements (51) eingreift, wobei der Angriffsfinger (53) in freien Eingriff ins Innere der Aussparung (82) kommt, wenn der Schlagzusatz (10) in seine Kupplungsvorrichtung (20) eingesetzt ist, und gegen den Rand (89) des Ausschnittes (87) des Knopfkörpers drückt, der auf der Seite liegt, die der 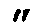 Dauerbetrieb"-Stellung entspricht, wenn der Mixzusatz (38) in seine Kupplungsvorrichtung (28) eingesetzt ist.

3. Schläger-Mixer nach Anspruch 2, **dadurch gekennzeichnet, daß** der handbetätigbare Knopf (67) drehbar um eine Achse montiert ist, die im wesentlichen parallel zur Längsachse der Welle des Motors (7) und quer zur vertikalen Verschiebung des Ausstoßelements (51) verläuft, und daß die die Aussparung (82) des Körpers des Knopfes (67) säumenden Innenwände (84, 85) miteinander einen Kreissektor definieren, der eine Winkelbewegungsstrecke bildet, die der Drehbewegung des Knopfes (67) entspricht, die den Schalter (71) von seiner Extremstellung 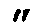 Dauerbetrieb" bis zu seiner 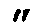 Momentanbetrieb"-Stellung bringt.

4. Schläger-Mixer nach einem der Ansprüche 1 bis 3, **dadurch gekennzeichnet, daß** die Kupplungsvorrichtung des Mixzusatzes durch einen vom hinteren Ende (26) der Welle (8) des Motors (7) getragenen drehbaren Mitnehmer (28) gebildet ist, der in einem gegenüber der Kupplungsöffnung (34) offenen zylindrischen Schaft (31) angeordnet ist, wobei der Mixzusatz (38) eine Welle (39) aufweist, von der ein Ende sich beim Einsetzen in den Schaft (31) an den Mitnehmer (28) ankuppelt, und daß das Gehäuse einen ausgesparten Bereich (4) aufweist, der einen Handgriff (5) begrenzt, wobei das bewegliche Element (74) eine horizontal unter dem ausgesparten Bereich (4) des Gehäuses angeordnete gleitende Stange ist, deren vorderer Teil in Form eines entkuppelbaren Blockierungselements (91) ausgebildet ist, das bei entnommenem Mixzusatz (38) im entkuppelten Zustand bezüglich des Ausstoßelement (51) ist und so dieses freigibt, und das wenn das Ende der Welle (39) des Mixzusatzes (38) mit dem Mitnehmer (28) verbunden ist, gegen die elastischen Rückholelemente (78) in Eingriff mit dem Ausstoßelement (51) in dessen tiefer Stellung kommt und dieses blockiert, und deren hinterer Teil in Form einer Einhängeklaue (93) ausgebildet ist, die mit ihrem freien Ende durch eine in der Seitenwand des Schafts (31) ausgebildete Öffnung (96) eingreift, wobei die Klaue (93) mit der Innenfläche der Seitenwand des Schaftes (31) zusammenwirkt und gegen sie andrückt, wenn der Mixzusatz nicht eingesetzt ist, und gegen die elastischen Rückholelemente (78) durch den Mixzusatz (38) verschoben wird, wenn das Ende seiner Welle (39) sich an den Mitnehmer (28) kuppelt.

5. Schläger-Mixer nach Anspruch 4, **dadurch gekennzeichnet, daß** das Ausstoßelement (51) in seinem unteren Bereich einen Stift (56) und der obere Bereich des Ausstoßelements (51) an seiner Basis eine Anschlagfläche (110) aufweist und das entkuppelbare Blockierungselement (91) der Stange (74) zu einer vertikalen Gabel mit drei Zinken (99, 100 und 101) geformt ist, von denen zwei freie Enden, nämlich die freien Enden des mittleren Zinkens (100) und des oberen Zinkens (101) miteinander durch eine weitere Anschlagfläche (103) verbunden sind, die gegenüber der Anschlagfläche (110) des oberen Bereichs des Ausstoßelements (51) zu liegen kommt, wenn der Schlagzusatz (10) in seine Kuppelvorrichtung (20) eingesetzt ist, wobei der Stift (56) einen Durchgang zum Eintritt des unteren Zinkens (99) der Gabel aufweist, wenn das Ende der Welle (39) des Mixzusatzes (38) an den Mitnehmer (28) angekuppelt ist.

6. Schläger-Mixer nach Anspruch 4 oder 5, **dadurch gekennzeichnet, daß** die elastische Rückholvorrichtung (78) durch eine Druckfeder gebildet sind, die zwischen den unteren Bereich der Einhängeklaue (93) der Stange (74) und einen vertikalen Flügel (105) montiert ist, der auf der äußeren Fläche der Seitenwand des Schaftes (31) nahe seinem Boden ausgebildet ist.
